Europäisches Patentamt

European Patent Office

Office européen des brevets

(19)

(11) Publication number: **0 380 918**
**A1**

(12) **EUROPEAN PATENT APPLICATION**

(21) Application number: **90100252.7**

(22) Date of filing: **06.01.90**

(51) Int. Cl.5: **G01F 23/22**

(30) Priority: **13.01.89 US 297148**

(43) Date of publication of application:
**08.08.90 Bulletin 90/32**

(84) Designated Contracting States:
**DE FR GB IT**

(71) Applicant: **Hughes Aircraft Company**
**7200 Hughes Terrace P.O. Box 45066**
**Los Angeles California 90045-0066(US)**

(72) Inventor: **Steinhauer, Robert A.**
**6905 West Cherty Drive**
**Rancho Palos Verdes, California 90274(US)**

(74) Representative: **Witte, Alexander, Dr.-Ing.**
**Augustenstrasse 7**
**D-7000 Stuttgart 1(DE)**

(54) **Improved fuel measurement technique.**

(57) An improved technique for measuring the liquid (14) remaining in a satellite is disclosed. The method of the invention includes the steps of a) coupling a known amount of thermal engery into a tank (12); b) measuring the time rate of change of the temperature of the liquid (14) in response to the known amount of thermal energy; and c) calculating the mass of the liquid (14) in the tank (12) as a function of the measured time rate of change of temperature in the liquid (14).

FIG. 1

EP 0 380 918 A1

## BACKGROUND OF THE INVENTION

### Field of the Invention:

The present invention relates to vehicle propulsion systems. More specifically, the present invention relates to methods and systems for measuring the amount of fuel remaining in a spacecraft.

While the present invention will be described herein with reference to an illustrative embodiment for a particular application, it is understood that the invention is not limited thereto. Those of ordinary skill in the art having access to the teachings provided herein will recognize additional applications, modifications and embodiments within the scope thereof.

### Description of the Related Art:

The fuel mass remaining in a spacecraft is a significant limiting factor on mission life, the length of time that the spacecraft will be able to maintain a desired station, position, and/or orientation in space. Accordingly, the accurate measurement of the mass of fuel remaining in an on orbit spacecraft over the lifetime of the mission is critical for replacement planning.

As a gas pressurant is often used on conventional satellites to force fuel in the direction of an outlet of the fuel container, some conventional fuel measurement techniques involve the use of a sensor to measure changes in the pressure associated with the pressurant. Such indirect measurement techniques provide the mass of the fuel remaining via a simple calculation.

Unfortunately, for large systems, the change in pressure of the pressurant may be too small over the life of the mission to provide a sufficiently accurate measurement. In addition, near the end of the mission, when the volume of the container is typically substantially filled with pressurant, differential pressure changes are small and difficult to detect. Accordingly, these systems tend to be least accurate near the end of the mission when accuracy in the measurement is most critical. Accordingly, there is currently considerable dissatisfaction with the performance of conventional indirect fuel measurement techniques.

While a number of direct fuel measurement techniques are known in the art, these techniques have also been found to be generally unsatisfactory. The class of direct fuel measurement techniques includes acoustic, optical, mechanical, and radioactive schemes. The acoustic techniques involve the penetration of the fuel tank with a generator by which a sounding process is performed. While acoustic systems tend to be costly, the primary disadvantage of this approach lies in the impairment of the integrity of the tank by the penetration, welding or mechanical attachment of acoustic devices thereto.

The undesirable penetration of the tank is generally required for the optical and mechanical techniques as well. In addition, the mechanical techniques (e.g. systems employing floats) tend to be susceptible to launch vibrations. Calibration is problematic and the floats are generally awkward in the often used conical spherical tank.

Radioactive techniques present numerous safety and handling problems which render such schemes generally less desirable than the other conventional techniques.

There is therefore a need in the art for an inexpensive direct satellite fuel measurement technique which reliably provides accurate readings near the end of a mission.

## SUMMARY OF THE INVENTION

The need in the art is addressed by the improved liquid measurement technique of the present invention which includes the steps of a) coupling a known amount of thermal energy into a tank; b) measuring the time rate of change of the temperature dT dt of liquid in the tank in response to the input of thermal energy; and c) calculating the mass m of the liquid as a function of the measured time rate of change of the temperature thereof. In a specific embodiment, the method of the invention includes the step of compensating for the mass of the tank.

In a specific embodiment, the apparatus of the invention includes a selectively actuatable electrical heater for coupling a known amount of thermal energy into the tank; a sensor for measuring the time rate of change of the temperature dT/dt of the liquid in response to the known amount of thermal energy; and a processor for calculating the mass m of the liquid in the tank as a function of the measured time rate of change of the temperature of the liquid. The invention contemplates transmitting a signal representative of the time rate of change of the temperature of the liquid in response to the known amount of thermal energy for calculation of the mass m of the liquid in the tank.

## BRIEF DESCRIPTION OF THE DRAWINGS

Fig. 1 is a block diagram of an illustrative implementation of the liquid measurement technique of the present invention.

Fig. 2 shows a typical time response of the temperature of the liquid in response to the application of thermal energy.

Fig. 3 shows a typical family of temperature time response curves corresponding to various amounts of liquid.

Fig. 4 illustrates the variation in the sensitivity of the liquid measurement system of the present invention as a function of the size of the heater utilized therein.

Fig. 5 illustrates the relationship of the mass m of a liquid with the reciprocal of the time rate of change of temperature dt/dT of the liquid which serves as an underlying principle of the present invention.

## DESCRIPTION OF THE INVENTION

Accurate determination of fuel remaining on board a satellite is necessary to predict remaining on orbit lifetime. Previously the measurement of the pressure of the pressurant gas ($N_2$ or He) was sufficiently accurate. However, with larger spacecraft, i.e. those using liquid propulsion for perigee augmentation and circularization of orbit, the change in pressure over a satellite's mission life is not typically large enough to use gas pressure or differential pressure measurements to derive a measure of fuel remaining. The improved liquid measurement technique of the present invention substantially addresses this problem. The technique of the present invention determines the mass of the fuel or other liquid remaining in a chamber or tank by a) coupling a known amount of thermal energy into the tank; b) measuring the time rate of change of the temperature dT/dt of the liquid in response to the known amount of thermal energy; and c) calculating the mass m of the liquid in the tank as a function of the measured time rate of change of temperature of the liquid.

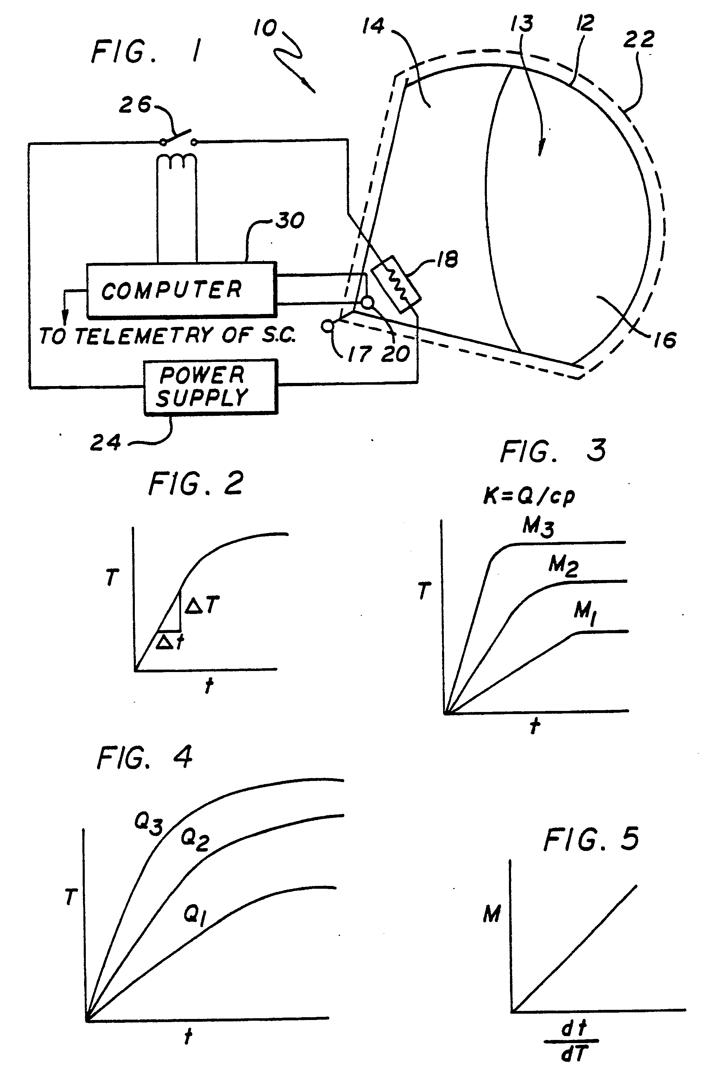

Fig. 1 shows a system which provides an illustrative implementation of the technique of the present invention. The liquid measurement system 10 of the present invention is shown in conjunction with a conventional conical spherical fuel tank 12. Within the chamber 13 of the tank 12 is a quantity of liquid fuel or oxidizer 14 and a gas pressurant 16. The liquid is in thermal contact with the tank. The pressurant 16 serves to force the liquid 14 in the direction of an outlet 17. The tank 12 is typically metallic, a titanium alloy for example.

The liquid measurement system of the present invention provides a heater 18 on the tank of a known size or rating. The heater 18 should be sized to provide 2 - 5 ˚F of temperature variation within a few hours to provide an accurate determination of the time rate of change of temperature and hence, an accurate measurement of liquid mass. A low wattage heater should suffice, e.g. on the order of 0.5 to 2.0 watts.

Also mounted on the tank 12 is a sensor or thermocouple 20. The heater 18 should be located on the tank 12 so that it is in thermal contact with the liquid 14. Multiple heaters may be mounted on the tank and selectively activated to provide such thermal contact as the fuel level changes during the course of the mission.

The sensor 20 may be a platinum resistance transducer or comparable sensor as is known in the art. Both the heater 18 and the sensor 20 are adhesively bonded to the tank 12 and should be located in contact with the tank 12 within any thermal blankets 22 as are typically employed on the fuel tanks of modern spacecraft. Multiple heaters must be provided where multiple tanks are used to avoid mass imbalance. Additional sensors may then be used for measurement redundancy. In any event, assuming the tanks are in thermal contact, only one heater should be used to provide for the input of a known amount of thermal energy.

The heater 18 is selectively powered by a power supply 24 (typically provided on the spacecraft bus), via a switch 26 which is activated under the control of a computer, microprocessor or controller 30. The computer 30 may be onboard or remote as is known in the art. After the heater 18 is switched on, temperature readings are acquired by the computer 30 from the sensor 20. If the computer 30 is located onboard, as shown in Fig. 1, either the temperature readings or the calculated liquid mass are transmitted to an appropriate ground station or other control terminal as part of the spacecraft telemetry signal.

The heater 18 is selectively activated by the computer 30 to provide a known thermal input to the liquid 14. Knowing the rate of change of temperature of the liquid 14 with respect to time dT/dt, the specific heat $C_f$ of the liquid 14, the specific heat of the tank $C_t$, the mass $m_f$ of the liquid 14 may be calculated as follows. The heater power Q is given by:

Q = 14.33

$$P_h = (m_f\, C_f + m_t\, C_t)\,(dT/dt) \qquad [1]$$

where

$P_h$ = the electrical heater power in watts;

14.33 = the factor for conversions from watts to gram-calories per minute (g-cal/min.);

$m_f$ = mass of the liquid in grams; and

$m_t$ = mass of the fuel tank.

Rearranging equation [1] for $m_f$ yields:

$$m_f\, C_f = 14.33\, P_h\,(dt/dT) - m_t\, C_t$$

$$m_f = 1/C_f\,[14.33\, P_h\,(dt/dT) - m_t\, C_t]$$

$$m_f = 14.33\, P_h/[C_f\,(dT/dt)] - m_t\, C_t/C_f \qquad [2]$$

For example, where:

$P_h = 5$ w
$C_f = 0.75$ g-cal/g $^\circ$C
$dt/dT = 60$ min/ $^\circ$C
$m_t = 5$ lbs $= 2268$ g and
$C_t = 0.126$ g-cal/g $^\circ$C

the liquid mass $m_f$ is found to be 5351 g or 11.8 lbs. Alternatively, if $dt/dT$ is equal to 600 min/ $^\circ$C and the other parameters remain unchanged, the liquid mass $m_f$ is computed to be 56939 g or 125.5 lbs.

Note that the heater power could have been increased for the last example to get a more practical value for $dt/dT$. Note also that radiative losses should be small because of the use of multilayer thermal blankets on the fuel tanks. Also, radiative losses can be calibrated out during a spacecraft thermal-vacuum test using a known neutral fuel, such as alcohol.

In operation, a control signal would be sent from either the onboard computer 30 or from a remote station (not shown) to activate the switch 26 to apply power to the heater 18 and thereby add a known amount of thermal energy to the tank 12. The temperature of the tank is measured by the sensor 20 and input to the computer 30 for calculation of the mass m in accordance with equation [2] above.

Fig. 2 shows a typical time response of the temperature of the liquid in response to the application of thermal energy. Note that the slope of the linear portion of the curve represents $dT/dt$. In a practical system, there would be a family of curves each corresponding to a different mass m, see Fig. 3. Fig. 4 illustrates the variation in the sensitivity of the system 10 as a function of the size of the heater 18 as indicated by the power rating Q. In designing the system, the heater should be chosen to provide the above noted 2 - 5 $^\circ$F change in temperature of the liquid within a few hours to provide an accurate determination of the time rate of change of temperature and hence, an accurate mass measurement. Fig. 5 illustrates the correlation of mass m with the reciprocal of the time rate of change of temperature $dt/dT$.

Thus, the present invention has been described herein with reference to a particular embodiment for particular application. Those of ordinary skill in the art having access to the teachings provided herein will recognize additional modifications, applications and embodiments within the scope thereof. For example, the invention is not limited to spacecraft systems. Nor is the invention limited to any particular technique for applying a known amount of thermal energy to the liquid being measured. Further, the invention is not limited to the technique shown for calculating the mass as a function of the rate of change of temperature of the liquid. The invention is not limited to use with liquid. The invention may be used with other substances which may be depleted and have the property of internal thermal conductivity. Finally, the invention is not limited with respect to the source or location of command and computational assets.

It is intended by the appended claims to cover any and all such modifications applications and embodiments within the scope of the invention.

## Claims

1. A method for measuring the mass ($m_f$) of a liquid (14) in a tank (12), characterized by the steps of:

   a) coupling a known amount of thermal energy into said tank (12);

   b) measuring a time rate of change ($dT/dt$) of the temperature (T) of said liquid (14) in response to said known amount of thermal energy; and

   c) calculating the mass ($m_f$) of the liquid (14) in said tank (12) as a function of the measured time rate of change ($dT/dt$) of temperature (T) of said liquid (14).

2. The method of claim 1, characterized in that the step of coupling a known amount of thermal energy into said tank (12) includes the step of selectively activating an electrical heating element (18) in thermal contact with said liquid (14).

3. The method of claim 1, characterized in that the step of calculating the mass ($m_f$) of the liquid (14) in the tank (12) includes the step of dividing the power ($P_h$) applied to said electrical heating element (18) by the product of the specific heat ($C_f$) of said liquid (14) and said measured time rate of change ($dT/dt$) of temperature (T) of said liquid (14) to ascertain said mass ($m_f$) of said liquid (14).

4. The method of claim 3, characterized in that the step of calculating the mass ($m_f$) of the liquid (14) in the tank (12) further includes the step of subtracting a term from the ratio of the power ($P_h$) applied to said heating element (18) to the product of the specific heat ($C_f$) of the liquid (14) and the time rate of change ($dT/dt$) of temperature (T) of the liquid (14) equal to the product of the mass ($m_t$) of the tank (12) and the ratio of the specific heat ($C_t$) of the tank (12) and the specific heat ($C_f$) of the liquid (14).

5. A liquid measurement system (10) for measuring the mass ($m_f$) of a liquid (14) in a tank (12), characterized by:

- first means for coupling a known amount of thermal energy into said tank (12);

- means for measuring the time rate of change ($dT/dt$) of the temperature (T) of said liquid (14) in response to said known amount of thermal energy; and

- means for calculating the mass ($m_f$) of the liquid (14) in said tank (12) as a function of the measured time rate of change (dT/dt) of the temperature (T) of said liquid (14).

6. The system of claim 5, characterized by sensor means (20) for sensing the thermal energy in said liquid (14).

7. The system of claim 5 or 6, characterized in that said first means for coupling a known amount of thermal energy into said tank (12) includes an electrical heating element (18).

8. The system of any of claims 5 through 7, characterized in that said first means for coupling a known amount of thermal energy into said tank (12) includes a switch (26) connected between an electrical power supply (24) and an electrical heating element (18).

9. The system of claim 8, characterized in that said first means for coupling a known amount of thermal energy into said tank (12) includes computer means (30) for selectively activating said switch (26).

10. A liquid measurement system for measuring the mass ($m_f$) of liquid (14) in a tank (12), characterized by:
- first means for coupling a known amount of thermal energy into said tank (12);
- means for measuring a time rate of change (dT/dt) of the temperature (10) of said liquid (14) in response to said known amount of thermal energy and providing a signal in response thereto; and
- means for transmitting said signal for calculation of the mass ($m_f$) of the liquid (14) in said tank (12) as a function of the measured time rate of change (dT/dt) of the temperature (T) of said liquid (14).

EP 0 380 918 A1

FIG. 1

FIG. 2

FIG. 3

$K = Q/cp$

FIG. 4

FIG. 5

2405P224EP

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 10, no. 308 (P-508)(2364), 21 October 1986; & JP - A - 61 122 524 (ISHIKAWAJIMA HARIMA HEAVY IND. CO. LTD) 10.06.1986 * whole document * | 1,2,5-7 ,10 | G 01 F 23/22 |
| A | DE-A-3 342 827 (BASF AG) * abstract; figure 1 * | 1 | |

TECHNICAL FIELDS SEARCHED (Int. Cl.5)

G 01 F
G 01 G
G 01 K

The present search report has been drawn up for all claims

| Place of search | Date of completion of the search | Examiner |
|---|---|---|
| BERLIN | 11-05-1990 | VORROPOULOS G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)